# EUROPÄISCHE PATENTSCHRIFT

(11) **EP 1 415 841 B1**
(45) Veröffentlichungstag und Bekanntmachung des Hinweises auf die Patenterteilung: **24.12.2008**
(21) Anmeldenummer: 03020990.2
(22) Anmeldetag: 17.09.2003
(51) Int. Cl.: B60K 11/04, B62D 25/08, F16B 19/10

(54) **Wärmetauscheranordnung**
Heat exchanger assembly
Ensemble d' échangeur de chaleur

(30) Priorität: 29.10.2002 DE 10250334
(43) Veröffentlichungstag der Anmeldung: 06.05.2004
(73) Patentinhaber: Modine Manufacturing Company, Racine/Wisconsin 54403-2552 (US)
(72) Erfinder: Beck, Ralf, Dipl.-Ing., 72764 Reutlingen (DE); Nitsche, Werner, Dipl.-Img. FH, 73230 Kirchheim /Teck (DE); Strähle, Roland, Dipl.-Ing. FH, 72669 Unterensingen (DE); Nies, Jens, Dipl.-Ing., 71088 Holzgerlingen (DE); Rockenfeller, Heinrich, Dipl.-Ing., 42138 Kirchentellinsfurt (DE); Bittner, Wilfried, 70794 Filderstadt (DE)
(74) Vertreter: Wolter, Klaus-Dietrich

(56) Entgegenhaltungen:
- EP-A- 0 479 011
- EP-A- 0 707 996
- EP-A- 1 143 156
- DE-A1- 3 916 777
- DE-A1- 4 142 023
- DE-A1- 4 332 919
- DE-A1- 4 411 456
- DE-A1- 10 018 001
- DE-A1- 19 953 785
- DE-C1- 3 926 569
- DE-U1- 9 412 398
- FR-A- 2 794 170
- GB-A- 2 305 961
- US-A- 5 139 080
- PATENT ABSTRACTS OF JAPAN Bd. 1999, Nr. 01, 29. Januar 1999 (1999-01-29) -& JP 10 274037 A (SUZUKI MOTOR CORP), 13. Oktober 1998 (1998-10-13)

## Beschreibung

Die Erfindung betrifft eine Wärmetauscheranordnung gemäß dem Oberbegriff des Anspruchs 1.

Diese Wärmetauscheranordnung ist aus der DE 41 42 023 C2 bekannt. Bei der bekannten Wärmetauscheranordnung sind die Wärmetauscher zusätzlich an den Verstrebungen befestigt, was in solchen Fällen, wo mehrere, relativ klein bauende Wärmetauscher vorhanden sind, als geeignete Maßnahme angesehen werden kann. Sind jedoch einige der Wärmetauscher annähernd so groß wie der vom Rahmen eingeschlossene Raum, würde die Umsetzung der dortigen Idee zu Nachteilen bei der Demontage und Montage der Wärmetauscher führen. Ferner scheint die Ausbildung der Stützlager an den gegenüberliegenden Wänden des Rahmens, auf denen die Wärmetauscheranordnung im Fahrzeug gelagert ist, zu relativ großen Toträumen zu führen, denn der Abstand der Abstützung bis zum Rand des Wärmetauschers ist relativ groß.

Diese beschriebenen Nachteile sind auch der aus der DE 91 14 734 U1 bekannten Lösung zuzuordnen.

Die aus der DE 39 22 814 C2 bekannte Halterung für den Kühler eines flüssigkeitsgekühlten Fahrzeugmotors, zeigt eine Anordnung, die keine Verstrebungen im Rahmen benötigt, da der Rahmen in der Art einer Kassette ausgebildet ist, in deren einseitiger Öffnung ein Kühler eingeschoben werden kann. Die Befestigung erfolgt dort nicht über Stützlager an gegenüberliegenden Wänden, sondern über Zapfen, die an der unteren Querwand angeordnet sind. Insofern ist diese Lösung vom Oberbegriff weiter entfernt als die zuerst genannten Lösungen. Die beschriebenen und andere Lösungen des Standes der Technik scheinen auf Anwendungen im PKW - Bereich zugeschnitten zu sein. Bei schweren Nutzfahrzeugen liegen zum Teil andere periphere Bedingungen vor, die bei den beschriebenen Lösungen nicht berücksichtigt sind.

Aus der DE 43 32 919A1 ist eine weitere recht kostengünstige Wärmetauscheranordnung bekannt, die jedoch keinen Rahmen aufweist. Ein Ladeluftkühler und ein Wasserkühler werden vielmehr mit selbstsichemden Schrauben aneinander befestigt. Bei solchen Wärmetauscheranordnungen kann es zu unerwünschten Beeinträchtigungen zwischen den Wärmetauschern kommen. Die Anordnung wird unmittelbar mit an den Stutzen des Ladeluftkühlers angeordneten Stützlagern im Fahrzeug abgestützt.

Die Aufgabe der Erfindung besteht darin, die Anordnung aus dem Oberbegriff derart weiterzuentwickeln, dass der Rahmen für relativ großvolumige Wärmetauscher bei Nutzfahrzeugen geeignet ist.

Diese Aufgabe wird bei einer dem Oberbegriff entsprechenden Wärmetauscheranordnung erfindungsgemäß durch die kennzeichnenden Merkmale des Anspruchs 1 gelöst.

Dadurch, dass die Stützlager durch Ausbauchungen in den Wänden realisiert sind und in den Ausbauchungen bzw. in dem davon umschlossenen Raum vorzugsweise jeweils ein Eintritts - oder Ausstrittsstutzen angeordnet bzw. hindurchgeführt ist, wird insbesondere eine platzsparende Anordnung geschaffen, bei der darauf geachtet wurde, dass möglichst geringe Totzonen (nicht genutzte Zonen) vorhanden sind. Die vertikalen Wände folgen praktisch in ihrer Ausbildung der äußeren Kontur der Wärmetauscher mit ihren überstehenden Ein - oder Austrittsstutzen, die beispielsweise bei Ladeluftkühlern für Nutzfahrzeuge beträchtliche Durchmesser aufweisen müssen und entsprechend große Räume belegen. Bei den Lösungen aus dem Stand der Technik ist der Überstand von etwa geraden Wänden (also solchen die keine Ausbauchungen aufweisen) eingeschlossen, so dass die von den Längs - und Querwänden eingeschlossene Fläche relativ größer ist als diejenige nach der Erfindung. Somit stellt dieser Vorschlag eine kompakte Anordnung zur Verfügung. Bei der erfindungsgemäßen Ausbildung kann auch ein besserer Kraftfluss der Auflagerkräfte in den Rahmen hinein angenommen werden, der der partiellen Verformung der Wände folgt. Jedenfalls im Vergleich zu den angeformten Stützlagern aus dem Stand der Technik, scheint dieser Vorteil vorhanden zu sein.

Die Wände sind zweckmäßig verrippt und relativ dünnwandig, um ihre Stabilität bei geringem Materialeinsatz zu erhöhen. Unter Ausbauchung der Wände ist eine nach außen weisende Verformung derselben zu verstehen, die im Querschnitt etwa einen viertelkreisartigen oder dreieckförmigen Raum ausbildet, wobei an der unteren Seite der Ausbauchung oder Verformung das Stützlager angeordnet ist.

Weil zu den Mitteln zur Befestigung der Wärmetauscher dübelartige Stecker, bestehend aus Kopf und Stiel, gehören, die in übereinstimmende Öffnungen in Halterungen an den Wärmetauschern und Öffnungen in den Wänden einsetzbar sind und sich nach dem Durchstecken durch die Öffnungen aufspreizen, wird eine besonders schnelle und einfache Montage und Demontage der Wärmetauscher sichergestellt. Bei den dübelartigen Steckern handelt es sich um standardmäßige Befestigungselemente die den Anforderungen an die Befestigung von Wärmetauschern in Kraftfahrzeugen, wo bekanntlich Vibrationen und dergleichen Belastungen auftreten, durchaus Stand halten können. Ein wesentlicher Vorteil der hier verwendeten Stecker für die Anwender der Wärmetauscheranordnung ist deren leichte und schnelle Lösbarkeit im Demontagefall. Die Stecker sind ohne Hilfswerkzeug durch Eindrücken des Stiels in die Öffnung einsetzbar und mit Hilfe eines einfachen Hebels, beispielsweise eines Schraubendrehers, der unterhalb des Kopfes angesetzt wird, um den Stiel herauszuziehen, entfernbar. Außerdem sind die Stecker geeignet, durch Vibrationen verursachte Klappergeräusche der Wärmetauscher in ihren Halterungen zu unterdrücken.

Diejenigen Befestigungspunkte, die solche Stecker aufweisen, sind so ausgebildet bzw. angeordnet, dass der von den Befestigungskräften ausgehende größte zulässige Kraftvektor quer zum Stiel des Steckers auftritt, so dass solche Scherkräfte vom Stecker aufgenommen werden können. Um die Kompensation der aus anderen Richtungen wirkenden Befestigungskräfte zu ermöglichen, sind die anderen Befestigungspunkte (ohne Stecker) dementsprechend ausgebildet. Diese verhindern also, dass die Befestigungspunkte mit Stecker zu starken Belastungen bzw.

Überlastungen in Richtung des Stieles des Steckers ausgesetzt sind. Wenn pro Wärmetauscher zwei Befestigungspunkte mit Stecker vorgesehen sind, ist an einem Befestigungspunkt die Öffnung in der Halterung des Wärmetauschers als Langloch oder dergleichen ausgebildet, damit thermisch verursachte Ausdehnungen, die quer zum Stiel des Steckers auftreten können, zugelassen werden.

Sämtliche Befestigungspunkte befinden sich zwischen den Sammelkästen der Wärmetauscher und den Längs - bzw. Querwänden des Rahmens, so dass die Wärmetauscher nicht untereinander befestigt werden müssen. Zu den Längs - bzw. Querwänden zählen auch Versteifungsrippen an den Wänden. Weil die Wärmetauscher nur an den Wänden zu befestigen sind, sind einfache Laschen oder Haken an den Sammelkästen ausreichende Mittel zur Befestigung, weshalb sich die erfindungsgemäßen Lösung insbesondere für solche Einsatzfälle eignet, wo Sammelkästen aus Metall, beispielsweise aus Aluminium, vorhanden sind, denn solche Laschen oder Haken sind sehr leicht an den Sammelkästen anbringbar.

Damit wird dem Streben nach Ganzmetallwärmetauschern entsprochen, die wegen der besseren Recyclefähigkeit vorteilhaft sind. Rechtfertigen die Stückzahlen die Bereitstellung von Werkzeugen zur Herstellung der Sammelkästen aus Kunststoff, können jedoch auch dort die Befestigungsmittel mit äußerst geringem Aufwand im Werkzeugbau realisiert werden.

Auch die zur lösbaren Befestigung der Ventilatorhaube vorgesehenen Befestigungspunkte befinden sich nur am Rahmen bzw. nur zwischen dem Rahmen und dem Rand der Ventilatorhaube. Vorzugsweise enden die Längs - und Querwände an derjenigen Stirnseite, an der die Ventilatorhaube angesetzt werden soll, in einer etwa planen vertikalen Ebene. Auf dieser Ebene der Wände sind Haken angebracht, um die Ventilatorhaube, die ihrerseits ebenfalls korrespondierende Haken an ihrem Rand aufweist, in die erstgenannten Haken an den Wänden einhängen zu können. Die Haken nehmen hauptsächlich die Kräfte auf, die in Richtung der Kühlluft auftreten bzw. wirken. Ferner ist pro Seite ein Stecker vorgesehen, dessen Stiel - senkrecht zu der erwähnten Kühlluftrichtung - durch eine Öffnung in der Längswand und durch eine übereinstimmende Öffnung in einer an der Ventilatorhaube angeordneten Öse oder dergleichen eingesteckt wird. Die Kräfte, die senkrecht zur Kühlluftrichtung auftreten, werden durch den Formschluss (Anschläge) zwischen dem Rand der Ventilatorhaube und den Stirnseiten der Wände aufgefangen.

Die Ventilatorhaube stellt einen weitgehend luftdichten Abschluss der Wärmetauscheranordnung dar, so dass das Entweichen ungenutzter Kühlluft verhindert ist. Die Ventilatorhaube ist ebenfalls schnell montierbar und demontierbar.

Die Verstrebungen sind in einer zwischen den Wärmetauschern liegenden Ebene angeordnet und schließen mindestens ein wabenartiges Sechseck ein, wobei zwei gegenüberliegende Seiten des Sechsecks entlang der Längswände und im Bereich der Ausbauchungen angeordnet sind. Dadurch wird ein relativ großer freier, d. h. unverbauter Strömungsquerschnitt für die Kühlluft innerhalb des Sechsecks geschaffen und gleichzeitig wird eine sehr gute Stabilität des Rahmens erreicht. Jedenfalls ist die stabilisierende Wirkung größer als im Stand der Technik, wo parallel zu den Wänden verlaufende Verstrebungen vorgesehen sind, die im übrigen den Strömungsquerschnitt der Kühlluft stärker einschränken. Bei einer vorteilhaften Weiterbildung besitzt die Verstrebung Luftleiteigenschaften, um einen Teil der Kühlluft von der etwa zentrischen Lufteintrittsöffnung in der Ventilatorhaube gezielt in die im allgemeinen wenig gekühlten Eckbereiche der Wärmetauscher zu leiten, und um deren Anteil am Wärmeaustausch damit zu erhöhen.

Der gesamte Rahmen mit seinen Verstrebungen ist vorzugsweise ein einstückiges Teil, das aus Kunststoff hergestellt wird.

Von den Wärmetauschern der Anordnung ist mindestens einer mit seinen Sammelkästen parallel zu den Längswänden angeordnet und der/die benachbarten Wärmetauscher sind mit ihren Sammelkästen parallel zu den Querwänden angeordnet. Somit sind die die Sammelkästen verbindenden Rohre des mindestens einen Wärmetauschers quer zu den Rohren des benachbarten Wärmetauschers angeordnet. Diese Maßnahme ist für bestimmte Anwendungsfälle sinnvoll, da sie zu einer besseren Ausnutzung des Raumes innerhalb des Rahmens beiträgt aber auch Vorteile vom Wärmeaustausch her haben kann.

Insgesamt ist die erfindungsgemäße Wärmetauscheranordnung sehr robust und erfüllt auch in dieser Hinsicht in vollem Umfang die von den Anwendern aufgestellten Erwartungen.

Die Erfindung wird anhand von Zeichnungen in einem Ausführungsbeispiel beschrieben.
Fig. 1 Perspektivische Ansicht auf die Einzelteile der Anordnung;
Fig. 2 Perspektivische Ansicht auf den Rahmen;
Fig. 3 Einzelheit am Rahmen im Bereich eines Stützlagers;
Fig. 4, 5 und 6 Einzelheiten der Befestigung eines Wärmetauschers;
Fig. 7 Einzelheiten der Befestigung eines anderen Wärmetauschers;
Fig. 8 nicht vorhanden;
Fig. 9, 10, 11 Einzelheiten der Befestigung eines weiteren Wärmetauschers;
Fig. 13 nicht vorhanden;

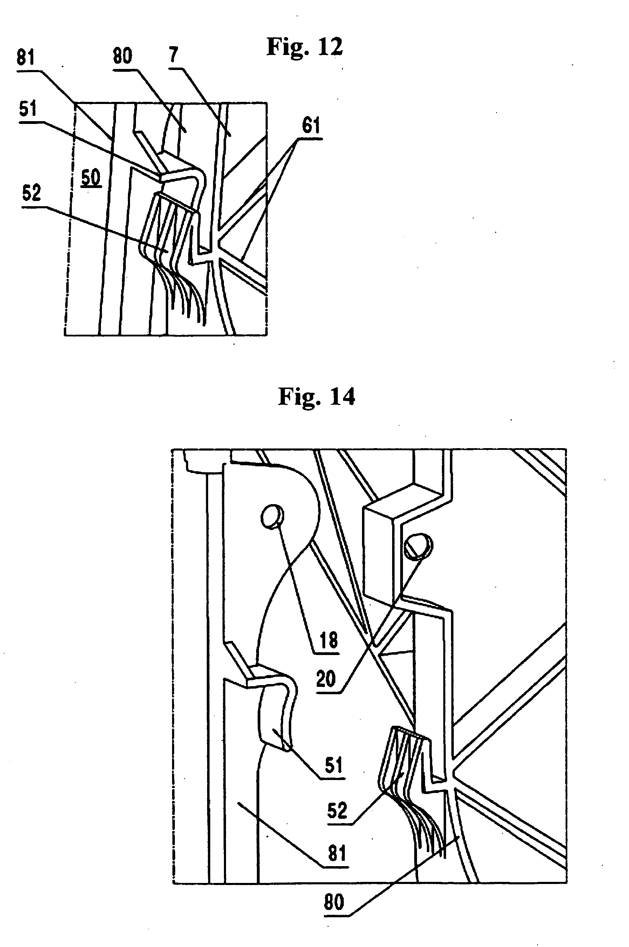

Fig. 12, 14 Einzelheiten der Befestigung der Ventilatorhaube;

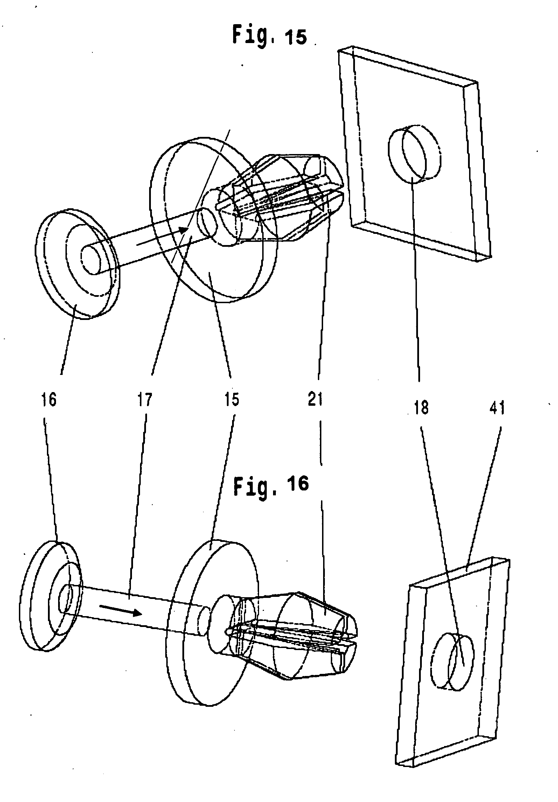

Fig. 15 und 16 Einzelheiten des Steckers;

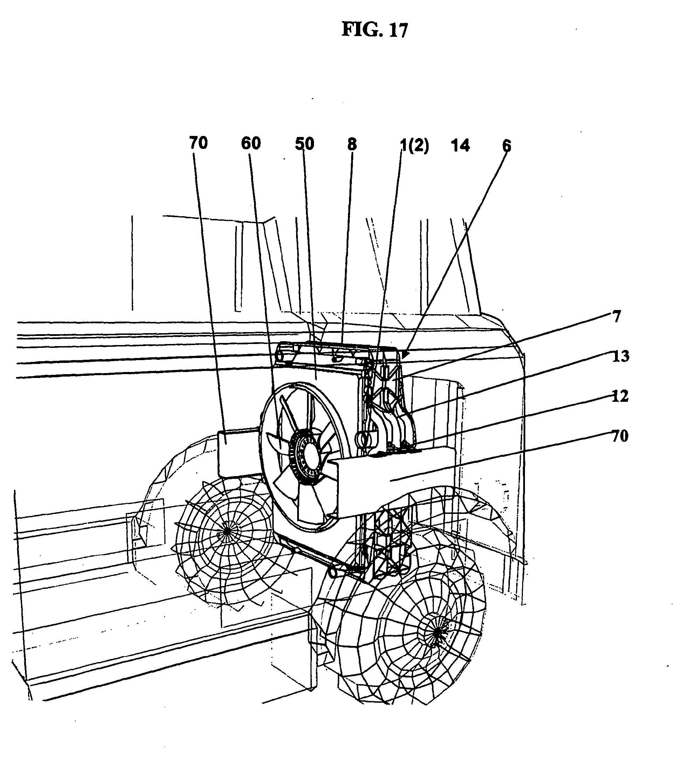

Fig. 17 Wärmetauscheranordnung im Nutzfahrzeug;

Aus dem vorstehenden Hinweis auf die Figuren ergibt sich bereits, aus welchen Figuren bestimmte Merkmale am besten zu sehen sind. Ein Merkmal besteht darin, dass die Stützlager **12** an den Holmen **70** des Kraftfahrzeugrahmens abgestützt sind, wie das aus der letzten Fig. 17 am besten zu sehen ist. Aus der Fig. 17 ist auch erkennbar, dass die Längswände **7** die längeren Wände des Rahmens **6** und die Querwände **8** demzufolge die kürzeren sind. Es sei aber betont, dass diese Begriffe nur zur Unterscheidung der Wände **7**, **8** eingeführt worden sind, d. h. die Wände **7** und **8** können beispielsweise durchaus von gleicher Länge sein, oder die Querwände **8** können länger als die Längswände **7** sein. Im Nutzfahrzeug sind die Querwände **8** in Querrichtung des Fahrzeugs angeordnet und die Längswände **7** in Hochrichtung des Fahrzeugs, dessen Frontpartie in der Fig. 17 in einer schräg von hinten gesehenen perspektivischen Ansicht erkennbar ist. Die Längs - und Querwände **7**, **8** haben eine sich in Längsrichtung des Fahrzeugs erstreckende Tiefe **55**, die im Ausführungsbeispiel über alle Wärmetauscher **3**, **4**, **5** der Anordnung hinweg reicht. Im Ausführungsbeispiel ist die Ventilatorhaube **50** in Fahrtrichtung gesehen hinter der Wärmetauscheranordnung angeordnet, d. h. der Ventilator **60** saugt die Kühlluft durch die Wärmetauscheranordnung an und bläst die erwärmte Kühlluft nach hinten ab. Die Gleichförmigkeit der Durchströmung der Wärmetauscher wird dabei auf jeden Fall besser sein. Ferner kann der im Fahrbetrieb auftretende Staudruck besser wirksam werden.

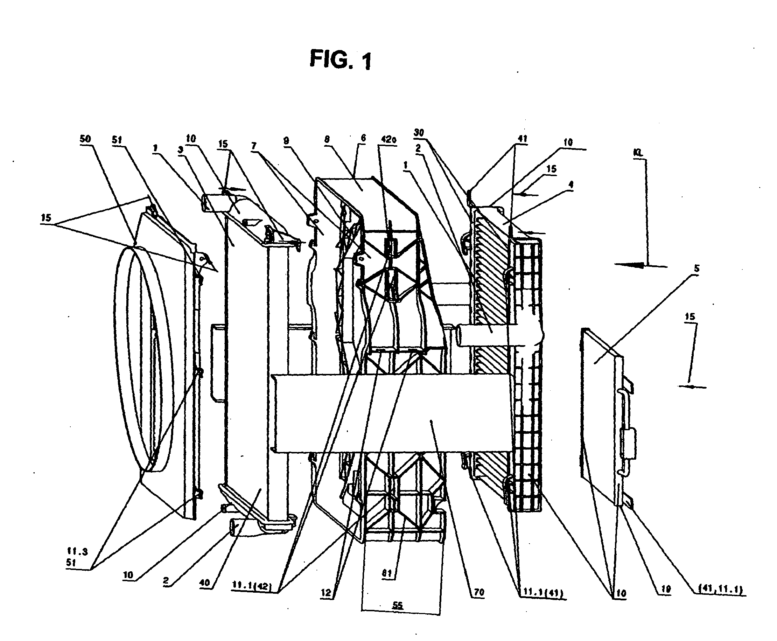

Wie die Fig. 1 am besten zeigt, besteht die Wärmetauscheranordnung aus dem Wärmetauscher **3**, der ein Kühlmittelkühler ist, aus dem Wärmetauscher **4**, der ein Ladeluftkühler ist und aus dem Wärmetauscher **5**, der ein Kondensator der Klimaanlage ist. Die Wärmetauscheranordnung ist nicht auf diese drei Wärmetauscher beschränkt. Die Kühlluft **KL** durchströmt zunächst den Kondensator **5**, dann den Ladeluftkühler **4** und zum Schluss den Kühlmittelkühler **3**, wobei die genannte Reihenfolge der Durchströmung bzw. der Anordnung der Wärmetauscher im vorliegenden Zusammenhang freigestellt ist. Jeder Wärmetauscher **3**, **4**, **5** besteht in an sich bekannter Weise aus zwei gegenüberliegenden Sammelkästen **10**, die mittels Rohren **30** miteinander verbunden sind, durch die die Ladeluft bzw. das

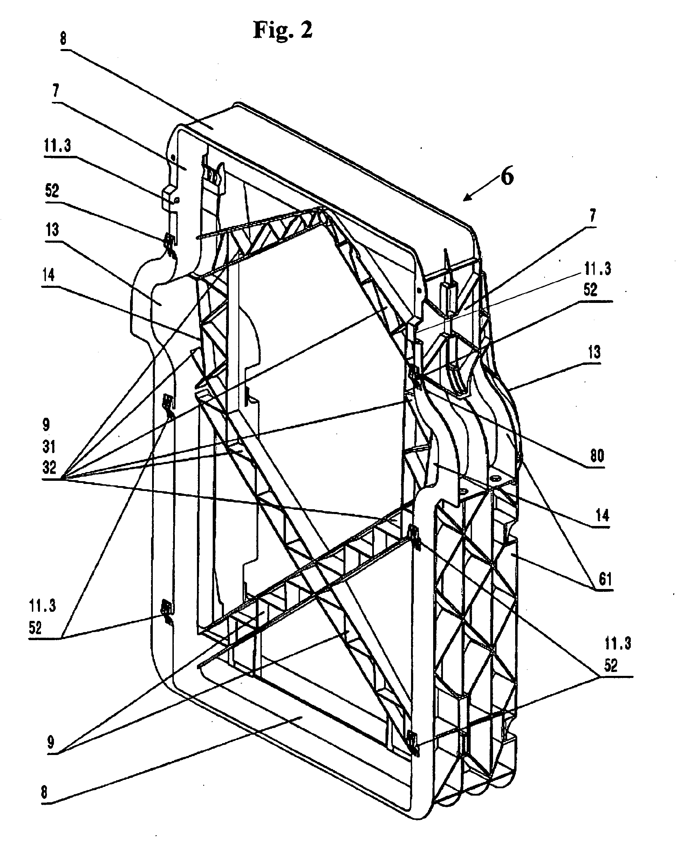

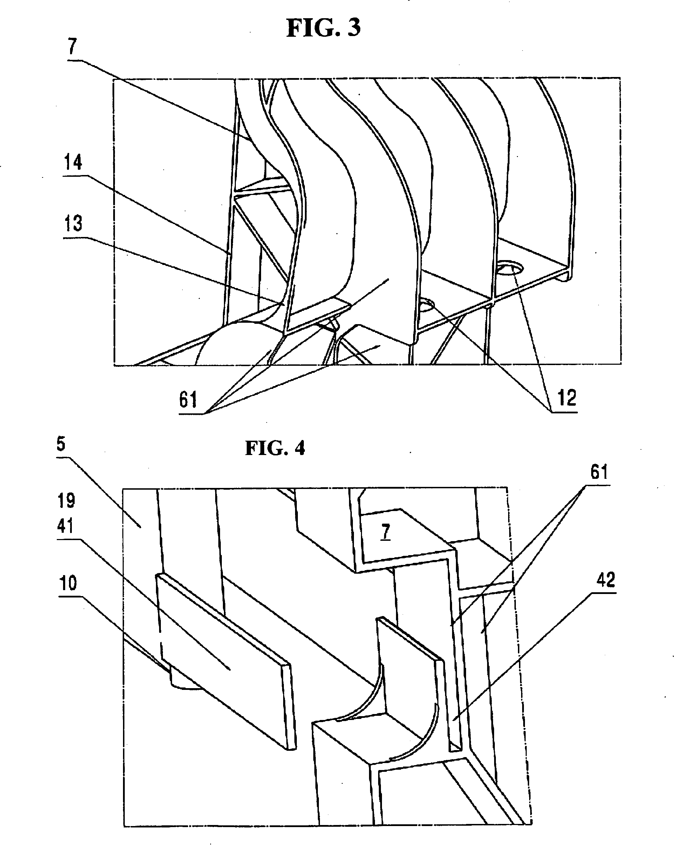

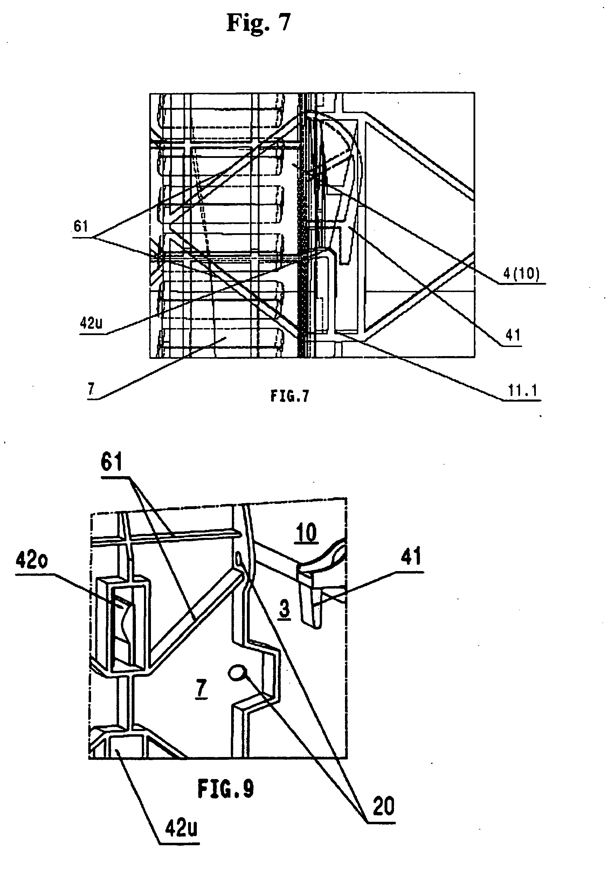

Kühlmittel des Antriebsmotors oder das Kältemittel der Klimaanlage strömt, um mittels Kühlluft **KL** gekühlt zu werden. Zwischen den Rohren **30** befinden sich entsprechende Wellrippen oder dergleichen, (nicht gezeigt) durch die die Kühlluft hindurchströmen kann. In der Fig. 1 wurden die Rohre **30** des Ladeluftkühlers **4** eingezeichnet, während bei dem Kühlmittelkühler **3** und dem Kondensator **5** auf die Darstellung der Rohre **30** verzichtet wurde. Jeder Wärmetauscher **3**, **4**, **5** besitzt einen Eintrittsstutzen **1** und einen Austrittsstutzen **2**, die an den Sammelkästen **10** angeordnet sind. Die Sammelkästen **10** des Ladeluftkühlers **4** und des Kondensators **5** sind im Bild senkrecht angeordnet. Im Gegensatz dazu sind die Sammelkästen **10** des Kühlmittelkühlers **3**, im Bild oben und unten, waagerecht verlaufend, weshalb die nicht gezeigten Rohre **30** des Kühlmittelkühlers **3** quer zu den Rohren **30** des Ladeluftkühlers **4** angeordnet sind. Die Ein - und Austrittsstutzen **1**, **2** des Ladeluftkühlers **4** sind von beträchtlicher Abmessung, um den notwendigen Volumenstrom der Ladeluft aufnehmen und durch den Kühler **4** leiten zu können. Sämtliche Wärmetauscher **3**, **4** und **5** sind unabhängig voneinander am Rahmen **6** befestigt worden, was weiter unten, anhand der Fig. 1 und der Fig. 2, näher beschrieben ist. Zunächst ist unter Hinweis auf die genannte Fig. 2 zu sehen, dass die gegenüberliegenden Längswände **7** des Rahmens **6** je eine partielle Ausbauchung **13** aufweisen, die jeweils einen Raum **14** innerhalb des Rahmens **6** ausbilden. Dieser Raum **14** ist auf der einen Seite nahezu durch den Eintrittsstutzen **1** des Ladeluftkühlers **4** ausgefüllt und der andere Raum **14** auf der anderen Seite durch dessen Austrittsstutzen **2**. Wie zu sehen ist, wird durch diese Maßnahme eine sehr kompakte Ausbildung der Anordnung gewährleistet. Es könnten auch andere Bauteile der Wärmetauscher **3**, **4**, **5** in diesen Räumen **14** angeordnet bzw. untergebracht sein. Ferner ist darauf hinzuweisen, dass es nicht unbedingt notwendig ist, die Ausbauchungen **13** in beiden Längswänden **7** auf gleicher Höhe anzuordnen, wie es im Ausführungsbeispiel (Fig. 2) vorgesehen wurde. Demzufolge sind in anderen nicht gezeigten Variationen die Ausbauchungen **13** auf unterschiedlichem Niveau angeordnet, um der geforderten Anschlussposition für die Wärmetauscher **3**, **4**, **5** zu entsprechen. Die Ausbauchungen **13** sind durch Verformungen der Längswände **7** geschaffen worden. An der Außenseite der Ausbauchungen **13** sind unmittelbar die Stützlager **12** angeordnet worden, die jeweils zwischen den Ausbauchungen **13** und den Holmen **70** des Fahrzeugrahmens angeordnet sind. Die Fig. 3 zeigt den Bereich der Ausbauchungen **13** als Ausschnitt. Dort sind Öffnungen eingezeichnet, in denen die Stützlager **12** sitzen. Die Quer - und Längswände **7, 8** des Rahmens **6** sind in der Art eines Fachwerks und nach den Regeln des Leichtbaus mit Versteifungsrippen **61** versehen worden. Einzelne Befestigungspunkte **11** können sich auch an den Versteifungsrippen **61** befinden, die zu den Wänden **7, 8** gehören. (Fig.1, 2, 3) Nach den gleichen Regeln wurde eine Verstrebung **9** zwischen den Längs - und Querwänden **7**, **8** vorgesehen. An der Verstrebung **9** ist bemerkenswert, dass dieselbe ein wabenartiges Sechseck **32** einschließt bzw. bildet, wodurch die Stabilität des Rahmens **6** besonders positiv beeinflusst wird. Zwei Seiten **31** des Sechsecks **32** erstrecken sich über den Bereich der Ausbauchungen **13**. Die Verstrebung **9** befindet sich auf einer vertikalen Ebene, die etwa in der Mitte der Tiefe **55** der Anordnung vorgesehen ist, wie am besten aus der Fig. 2 zu sehen ist. Die Verstrebung **9** ist in einem nicht gezeigten Ausführungsbeispiel so ausgebildet, dass sie geeignet ist, einen gewissen Anteil der Kühlluft auf die Ecken **40** (Fig. 1) der Wärmetauscher **3**, **4** zu leiten. Dazu ist die Verstrebung **9** ganz einfach etwas flächiger als in Fig. 2 gezeigt ausgebildet und hat einen Anstellwinkel gegenüber der Kühlluftrichtung, um die Kühlluft **KL** in die gewünschte Richtung zu führen. Um die Stabilitätswirkung der Verstrebung **9** geschickt zu nutzen, befinden sich etwa auf der gleichen vertikalen Ebene die Befestigungspunkte **11.1** für die Wärmetauscher **3** und **4**. Mit Blick auf die Fig. 1 ist erkennbar, dass der oberste Befestigungspunkt **11.1** im Rahmen **6** für den Kühlmittelkühler **3** vorgesehen ist und der unmittelbar darunter liegende Befestigungspunkt **11.1** für den Ladeluftkühler **4**. Der zuletzt genannte Kühler **4** wird bei dem Zusammenbau der Wärmetauscheranordnung des Ausführungsbeispiels als Erster im Rahmen **6** befestigt, und zwar wird er mit seinen Haken **41** an den vertikalen Sammelkästen **10** links und rechts in die zweiten Aufnahmen **42u** (von oben gesehen) und in die entsprechenden unteren Aufnahmen **42** eingehangen. Ein solcher Befestigungspunkt **11.1** ist in der Fig. 7 gezeigt worden. Wenn der Ladeluftkühler **4** an allen vier Befestigungspunkten **11.1**, wie dort gezeigt, eingehangen wurde, wird er oben mit zwei (einer pro Seite) dübelartigen Steckern **15** befestigt. Aus den Fig. 14 und 15 ist zu sehen, dass keinerlei Hilfswerkzeug notwendig ist, um die Stecker **15** in übereinstimmende Öffnungen **18** in der Lasche **41** und in der Wand **7** einzustecken. Auf einer Seite ist die Öffnung **18** in der Lasche **41** als Langloch ausgebildet, (nicht gezeigt) um die thermische Ausdehnung des Ladeluftkühlers **4** quer zur Richtung des Stiels **17** des Steckers **15** zu erlauben. Aus der Fig. 1 geht ferner hervor, dass der Stecker **15** mit seinem Stiel **17** parallel zur Richtung der Kühlluft **KL** angeordnet ist. In der Fig. 1 wurden durch Pfeile die Stecker **15** angedeutet, wobei jeder Pfeil dessen Stiel **17** symbolisiert. Die Stecker **15** sind geeignet, quer zur Richtung des Stiels **17** des Steckers **15** angreifende Kräfte aufzunehmen. Sie verhindern somit das Wandern der Wärmetauscher, worunter Bewegungen derselben quer zur Kühlluftrichtung zu verstehen sind, aber sie erlauben gleichzeitig, wie oben bereits gesagt wurde, die thermische Ausdehnung. Die Kräfte, die parallel zur Kühlluft **KL** wirken, also quer zur Richtung des Stiels **17**, werden im wesentlichen von den Haken **41** in den Aufnahmen **42** aufgenommen.

Anhand der Fig. 4, 5 und 6 soll jetzt die Befestigung des Wärmetauschers **5** (Kondensator) beschrieben werden. Der Kondensator **5** besitzt ebenfalls vier Befestigungspunkte **11.1**, wovon aber lediglich einer mit einem Stecker **15** ausgerüstet ist. Wie bei allen anderen Wärmetauschern **3**, **4** ist auch beim Kondensator **5** jeder Befestigungspunkt **11.1** zwischen einer Halterung **19**, in Form einer einfachen Lasche **41** am Sammelkasten **10** und einer einfachen Aufnahme **42** für die Lasche **41** am Rahmen **6**, und zwar an dessen Längswänden **7**, ausgebildet.

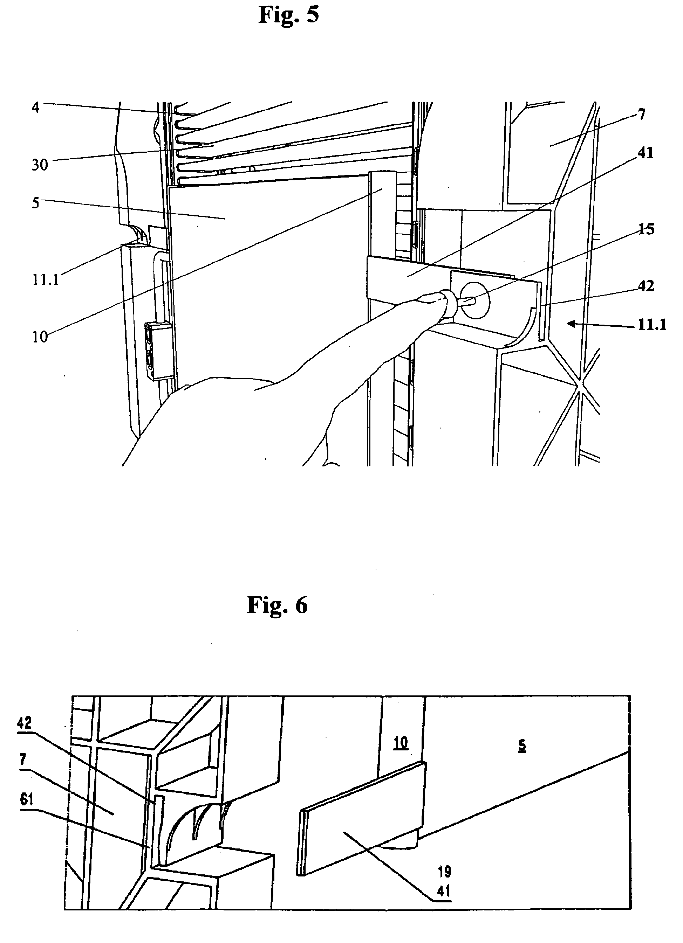

Die Fig. 4 zeigt den unteren Befestigungspunkt **11.1** auf der linken Seite und die Fig. 6 zeigt den Befestigungspunkt **11.1** auf der rechten Seite. Auf beiden Seiten wird der Kondensator **5** mit seinen Laschen **41** in die zugeordneten Aufnahmen **42** eingesetzt, wozu lediglich ein einfacher Handgriff erforderlich ist. Der nicht deutlich gezeigte obere linke Befestigungspunkt **11.1** kann identisch mit dem in Fig. 4 gezeigten Befestigungspunkt **11.1** ausgebildet sein. Es sollte auch bei dieser Befestigung erkennbar sein, dass die quer zur Richtung des Steckers **15** wirkende thermische Ausdehnung zugelassen wird.

In den Fig. 9, 10 und 11 ist die Befestigung des Kühlmittelkühlers **3** gezeigt worden.

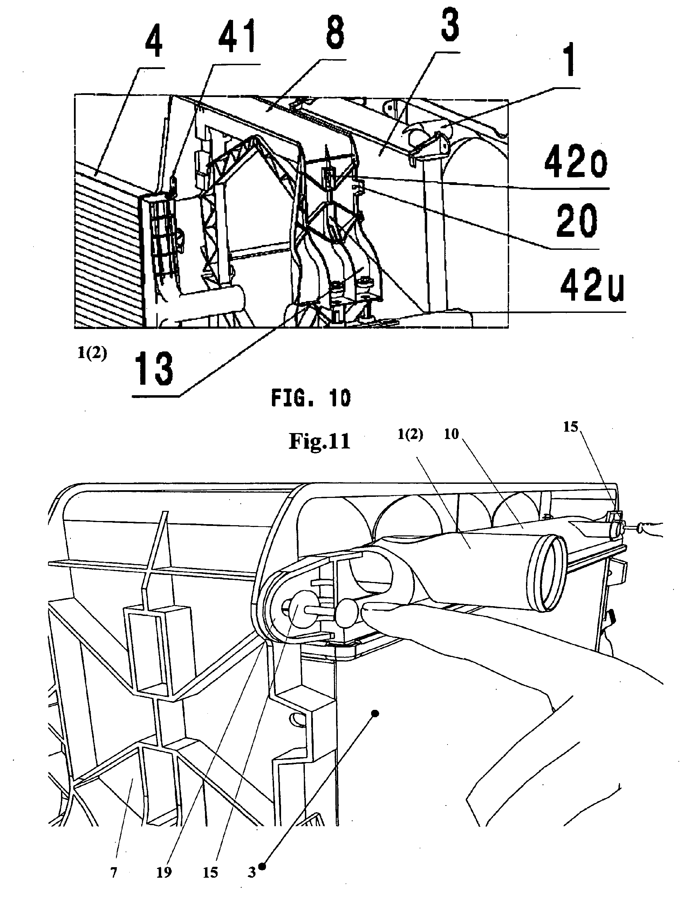

Der Kühlmittelkühler **3** besitzt ähnliche Haken **41** an seinen Sammelkästen **10** wie der bereits beschriebene Ladeluftkühler **4**. Mit diesen Haken **41** wird der Kühlmittelkühler **3** in zugeordnete obere Aufnahmen **42o** und identische untere Aufnahmen (Fig. 1) in den Längswänden **7** eingehangen. Schließlich wird er, wie in Fig. 11 gezeigt ist, mittels zweier Stecker **15** in seiner endgültigen Lage befestigt. Die Stecker **15** sind zwischen Halterungen **19** am oberen Sammelkasten **10** und den Längswänden **7** angeordnet, wobei die Stecker **15** jeweils in dort nicht gezeigte übereinstimmende Öffnungen gesteckt werden. Eine der Öffnungen **20** in der Längswand **7** ist jedoch in der Fig. 9 zu erkennen. Wie beim Ladeluftkühler **4** wurden auch beim Kühlmittelkühler **3** die Befestigungspunkte **11** so ausgelegt, dass die Stecker **15** mit ihren Stielen **17** parallel zur Richtung der Kühlluft liegen und quer dazu gerichtete Kräfte aufnehmen können, während die Haken **41** und die Aufnahmen **42** im wesentlichen Kräfte in Richtung der Kühlluft kompensieren.

In den Fig. 12 und 14 wird die Befestigung der Ventilatorhaube **50** gezeigt. Die Befestigungspunkte **11.3** der Ventilatorhaube **50** sind auch in den Fig. 1 und 2 eingezeichnet worden. Diese Punkte liegen alle etwa in einer vertikalen Ebene **80**, in der die Längs - und Querwände **7**, **8** des Rahmens **6** enden. An den Stirnseiten der Längswände **7** sind Aufnahmen **52** angeordnet und am Rand **81** der Ventilatorhaube **50** entsprechende Haken **51**, mit denen die Ventilatorhaube **50** in die Aufnahmen **52** einsetzbar ist. Im Ausschnitt der Fig. 14 wird das Einsetzen gezeigt, während sich im Ausschnitt der Fig. 12 die Ventilatorhaube **50** bereits in ihrer Endposition befindet. In dieser Endposition ist der Rand **81** der Ventilatorhaube **50** allseits im Eingriff mit den Stirnseiten der Wände **7** und **8**, wodurch quer zur Richtung der Kühlluft **KL** wirkende Verschiebekräfte aufgefangen werden. Die Kräfte, die in Richtung der Kühlluft **KL** wirken, werden im wesentlichen durch den Eingriff der Haken **51** in den Aufnahmen **52** kompensiert. Im Unterschied zu den anderen und vorstehend bereits beschriebenen Befestigungen, sind bei der Befestigung der Ventilatorhaube **50** die Stecker **15** mit ihren Stielen **17** quer zur Richtung der Kühlluft **KL** angeordnet. Sie können somit ebenfalls Kräfte aufnehmen, die in Richtung der Kühlluft **KL** wirken und tragen dazu bei, dass sich die Ventilatorhaube **50** im Betrieb mit ihrem Rand **81** nicht partiell vom Rand **80** abheben kann, wodurch das unerwünschte Abströmen von Kühlluft bzw. das Ansaugen von "Falschluft" verhindert wird. In der Fig.13 ist eine Öffnung **18** am Rand **81** der Ventilatorhaube **50** und eine Öffnung **20** in der Längswand **7** gezeigt, durch die hindurch der Stecker **15** eingesetzt wird. Insgesamt sind zur Befestigung der Ventilatorhaube **50** zwei Stecker **15** vorgesehen. Einer davon ist in der Fig. 14 gezeigt. Der andere Stecker **15** befindet sich auf gleicher Höhe auf der anderen Seite. Diese beiden oberen Befestigungspunkte sind in der Fig. 2 mit dem Bezugszeichen **11.3** gekennzeichnet worden.

In den Fig. 15 und 16 ist zu sehen, dass jeder Stecker **15** einen Kopf **16**, einen Stiel **17** und einen aufspreizbaren Fuß **21** aufweist. Durch Eindrücken des Stiels **17** in Richtung des eingezeichneten Pfeiles wird der Fuß **21** aufgespreizt und arretiert den Stecker **15** in den Öffnungen **18**, **20**. Durch Herausziehen des Stiels **17** ist die Verbindung lösbar. Zur Befestigung der Ventilatorhaube **50** und der Wärmetauscher **3**, **4**, **5** werden gleiche Stecker **15** verwendet.

## Patentansprüche

1. Wärmetauscheranordnung für Kraftfahrzeuge, bei der die Ein - und Austrittsstutzen (1, 2) aufweisenden Wärmetauscher (3, 4, 5) in einem Rahmen (6) in Luftströmungsrichtung der Kühlluft (KL) hintereinander liegend angeordnet sind, um nacheinander von der Kühlluft (KL) durchströmt zu werden, wobei der zwei Längs - und zwei Querwände (7, 8) umfassende Rahmen (6) mittels Verstrebungen (9) stabilisiert ist und bei der Mittel zur Befestigung der Wärmetauscher (3, 4, 5) an Befestigungspunkten (11) vorgesehen sind, sowie Stützlager (12) an gegenüberliegenden Wänden (7) zur Abstützung der Anordnung im Kraftfahrzeug, **dadurch gekennzeichnet, dass** die Stützlager (12) an Ausbauchungen (13) der Wände (7, 8) angeordnet sind, dass in dem durch die Ausbauchung (13) geschaffenen Raum (14) zu einem oder mehreren der Wärmetauscher (3, 4, 5) gehörende Bauteile angeordnet, bzw. durch den Raum (14) hindurchgeführt sind, und dass die Stützlager (12) an Holmen (70) des Kraftfahrzeugrahmens abgestützt sind, wobei die Verstrebungen (9) in einer zwischen den Wärmetauschern (3, 4) liegenden Ebene angeordnet sind und mindestens ein wabenartiges Sechseck (32) einschließen, wobei zwei gegenüberliegende Seiten (31) des Sechsecks (32) entlang der Längswände (7) und im Bereich der Ausbauchungen (13) angeordnet sind und wobei sämtliche Befestigungspunkte (11) zwischen den Sammelkästen (10) der Wärmetauscher und den Längs - und Querwänden des Rahmens angeordnet sind.

2. Wärmetauscheranordnung nach Anspruch 1, **dadurch gekennzeichnet, dass** zu den Mitteln zur Befestigung der Wärmetauscher (3, 4, 5) an wenigstens einem Befestigungspunkt (11.1) pro Wärmetauscher (3, 4, 5) dübelartige Stecker (15), bestehend aus Kopf (16) und Stiel (17), gehören, die mit ihrem Stiel (17) in übereinstimmende Öffnungen (18) in Halterungen (19) an den Wärmetauschern (3, 4, 5) und Öffnungen (20) in den Wänden (7, 8) einsetzbar sind und sich nach dem Durchstecken durch die Öffnungen (18, 20) aufspreizen, wobei die Stecker (15) lösbar sind.

3. Wärmetauscheranordnung nach Anspruch 1, **dadurch gekennzeichnet, dass** sich die Ausbauchungen (13) und die Stützlager (12) an den gegenüberliegenden vertikalen Wänden (7) des Rahmens (6) befinden, wobei ein Stützlager (12) zwischen einem Holm (70) des Kraftfahrzeugrahmens und der Ausbauchung (13) sitzt.

4. Wärmetauscheranordnung nach Anspruch 1, **dadurch gekennzeichnet, dass** die Ausbauchungen (13) in den Wänden (7) etwa der Kontur der Wärmetauscher (3, 4, 5) mit beispielsweise überstehenden Ein - und Austrittsstutzen (1, 2) folgende Verformungen der Wände (7) sind.

5. Wärmetauscheranordnung nach Anspruch 1, **dadurch gekennzeichnet, dass** die Verstrebungen (9) zumindest partiell so geformt sind, dass sie Luftführungseigenschaften in die Ecken (40) der in Kühlluftströmungsrichtung folgenden Wärmetauscher (3, 4, 5) aufweisen.

6. Wärmetauscheranordnung nach Anspruch 2, **dadurch gekennzeichnet, dass** die restlichen Befestigungspunkte (11.2) der Wärmetauscher (3, 4, 5) durch Haken oder Laschen (41) an den Sammelkästen (10) der Wärmetauscher (3, 4, 5) und Aufnahmen (42) an den Wänden (7, 8) des Rahmens (6) gebildet sind, so dass die Wärmetauscher (3, 4, 5) mit ihren Haken oder Laschen (41) in die zugeordneten Aufnahmen (42) einsetzbar sind und der Stecker (15) in den dafür vorgesehenen mindestens einen Befestigungspunkt (11.1) pro Wärmetauscher (3, 4, oder 5) einsetzbar ist.

7. Wärmetauscheranordnung nach einem der vorstehenden Ansprüche, **dadurch gekennzeichnet, dass** der mindestens eine Befestigungspunkt (11.1), der einen Stecker (15) aufweist und die anderen Befestigungspunkte (11.2) ohne Stecker (15) so angeordnet bzw. ausgebildet sind, dass in Richtung des Stiels (17) des Steckers (15) wirkende Befestigungskräfte von den anderen Befestigungspunkten (11.2) kompensiert sind und die thermische Ausdehnung der Wärmetauscher (3, 4, 5) in Querrichtung des Stiels (17) zugelassen ist.

8. Wärmetauscheranordnung nach einem der vorstehenden Ansprüche, **dadurch gekennzeichnet, dass** eine Ventilatorhaube (50) zur Wärmeübertrageranordnung gehört und dass Befestigungspunkte (11.3) mit dübelartigen Steckern (15) und ohne dübelartige Stecker (15) zwischen den Wänden (7, 8) des Rahmens (6) und dem Rand (81) der Ventilatorhaube (50) vorgesehen sind, wobei die Stecker (15) lösbar sind.

9. Wärmetauscheranordnung nach Anspruch 8, **dadurch gekennzeichnet, dass** die Befestigungspunkte (11.3) ohne Stecker mit Haken (51) und Aufnahmen (52) an den Stirnseiten der Wände (7, 8) bzw. an dem Rand (81) der Ventilatorhaube (50) ausgerüstet sind, wobei die Stirnseiten der Längs - und Querwände (7, 8) etwa in einer Ebene (80) liegen, wobei die Haken (51), Aufnahmen (52) und die Stecker (15) im wesentlichen Kräfte aufnehmen, die parallel zur Luftrichtung wirken können und wobei die quer zu dieser Richtung wirkenden Kräfte im wesentlichen durch Formschluss zwischen den Stirnseiten und dem Rand (81) der Ventilatorhaube (50) aufgefangen sind.

## Claims

1. Heat exchanger assembly for vehicles, in which the heat exchangers (3, 4, 5) which have inlet and outlet connectors (1, 2) are arranged in series in a frame (6) in the direction of air flow of the cooling air (KL) so that the cooling air (KL) flows through them in succession, wherein the frame (6) which comprises two longitudinal and two transverse walls (7, 8) is stabilized by means of struts (9), and in which means for attaching the heat exchangers (3, 4, 5) at attachment points (11) are provided, as well as supporting bearings (12) on opposite walls (7) for supporting the assembly in the motor vehicle, **characterized in that** the supporting bearings (12) are arranged on bulges (13) in the walls (7, 8), **in that**, in the space (14) which is formed by the bulge (13), components which are associated with one or more of the heat exchangers (3, 4, 5) are arranged, or said components are made to extend through the space (14), and **in that** the supporting bearings (12) are supported on bars (70) of the motor vehicle frame, wherein the struts (9) are arranged in a plane which lies between the heat exchangers (3, 4), and they enclose at least one honeycomb-like hexagon (32), wherein two sides (31) of the hexagon (32) which lie opposite one another are arranged along the longitudinal walls (7) and in the region of the bulges (13), and wherein all the attachment points (11) are arranged between the collecting boxes (10) of the heat exchangers and the longitudinal and transverse walls of the frame.

2. Heat exchanger assembly according to Claim 1, **characterized in that** peg-like plugs (15), composed of a head (16) and a shaft (17) are associated with the means for attaching the heat exchangers (3, 4, 5) at at least one attachment point (11.1) per heat exchanger (3, 4, 5), which plugs (15) can be inserted with their shaft (17) into corresponding openings (18) in holding elements (19) on the heat exchangers (3, 4, 5) and openings (20) in the walls (7, 8), and which spread apart after they have been plugged through the openings (18, 20), and in this context the plugs (15) are detachable.

3. Heat exchanger assembly according to Claim 1, **characterized in that** the bulges (13) and the supporting bearings (12) are located on the opposite vertical walls (7) of the frame (6), wherein a supporting bearing (12) is seated between a bar (70) of the motor vehicle frame and the bulge (13).

4. Heat exchanger assembly according to Claim 1, **characterized in that** the bulges (13) in the walls (7) are deformations of the walls (7) which approximately follow the contour of the heat exchangers (3, 4, 5) with, for example, protruding inlet and outlet connectors (1, 2).

5. Heat exchanger assembly according to Claim 1, **characterized in that** the struts (9) are at least partially shaped in such a way that they have air guiding properties into the corners (40) of the heat exchangers (3, 4, 5) which follow in the direction of flow of the cooling air.

6. Heat exchanger assembly according to Claim 2, **characterized in that** the remaining attachment points (11.2) of the heat exchangers (3, 4, 5) are formed by hooks or clips (41) on the collector boxes (10) of the heat exchangers (3, 4, 5) and receptacles (42) on the walls (7, 8) of the frame (6) so that the heat exchangers (3, 4, 5) can be inserted with their hooks or clips (41) into the associated receptacles (42), and the plug (15) can be inserted into the at least one attachment point (11.1), provided for it, on each heat exchanger (3, 4, or 5).

7. Heat exchanger assembly according to one of the preceding claims, **characterized in that** the at least one attachment point (11.1) which has a plug (15), and the other attachment points (11.2) without plugs (15) are arranged or embodied in such a way that attachment forces which act in the direction of the shaft (17) of the plug (15) are compensated by the other attachment points (11.2), and the thermal expansion of the heat exchangers (3, 4, 5) is permitted in the transverse direction of the shaft (17).

8. Heat exchanger assembly according to one of the preceding claims, **characterized in that** a fan hood (50) is associated with the heat exchanger assembly, and **in that** attachment points (11.3) with peg-like plugs (15) and without peg-like plugs (15) are provided between the walls (7, 8) of the frame (6) and the edge (81) of the fan hood (50), wherein the plugs (15) are detachable.

9. Heat exchanger assembly according to Claim 8, **characterized in that** the attachment points (11.3) without plugs are equipped with hooks (51) and receptacles (52) on the end sides of the walls (7, 8) and on the edge (81) of the fan hood (50), wherein the end sides of the longitudinal and transverse walls (7, 8) lie approximately in a plane (80), wherein the hooks (51), receptacles (52) and the plugs (15) essentially absorb forces which can act parallel to the direction of the air, and wherein the forces acting transversely with respect to this direction are absorbed essentially by positive engagement between the end sides and the edge (81) of the fan hood (50).

## Revendications

1. Ensemble d'échangeur de chaleur pour véhicules automobiles, dans lequel les échangeurs de chaleur (3, 4, 5) présentant des tubulures d'entrée et de sortie (1, 2) sont disposés dans un cadre (6) l'un derrière l'autre dans la direction d'écoulement de l'air de refroidissement (KL), pour être traversés l'un après l'autre par l'air de refroidissement (KL), dans lequel le cadre (6) comprenant deux parois longitudinales et deux parois transversales (7, 8) est stabilisé au moyen d'entretoises (9) et dans lequel il est prévu des moyens pour fixer les échangeurs de chaleur (3, 4, 5) à des points de fixation (11), ainsi que des paliers d'appui (12) sur des parois opposées (7) pour supporter l'ensemble dans le véhicule automobile, **caractérisé en ce que** les paliers d'appui (12) sont disposés sur des renflements (13) des parois (7, 8), **en ce que** des pièces faisant partie d'un ou de plusieurs des échangeurs de chaleur (3, 4, 5) sont disposées dans l'espace (14) créé par le renflement (13) ou sont menées à travers l'espace (14), et **en ce que** les paliers d'appui (12) sont appuyés sur des longerons (70) du châssis du véhicule automobile, dans lequel les entretoises (9) sont disposées dans un plan situé entre les échangeurs de chaleur (3, 4) et entourent au moins un hexagone (32) en forme de nid d'abeille, dans lequel deux côtés opposés (31) de l'hexagone (32) sont disposés le long des parois longitudinales (7) et dans la région des renflements (13) et dans lequel tous les points de fixation (11) sont disposés entre les caissons collecteurs (10) des échangeurs de chaleur et les parois longitudinales et transversales du cadre.

2. Ensemble d'échangeur de chaleur selon la revendication 1, **caractérisé en ce que** des fiches en forme de cheville (15), composées d'une tête (16) et d'une tige (17), font partie des moyens de fixation des échangeurs de chaleur (3, 4, 5) à au moins un point de fixation (11.1) par échangeur de chaleur (3, 4, 5), et peuvent être engagées par leur tige (17) dans des ouvertures correspondantes (18) dans des supports (19) sur les échangeurs de chaleur (3, 4, 5) et des ouvertures (20) dans les parois (7, 8) et s'élargissent par expansion après leur passage à travers les ouvertures (18, 20), dans lequel les fiches (15) sont séparables.

3. Ensemble d'échangeur de chaleur selon la revendication 1, **caractérisé en ce que** les renflements (13) et les paliers d'appui (12) se trouvent sur les parois verticales opposées (7) du cadre (6), dans lequel un palier d'appui (12) est placé entre un longeron (70) du châssis du véhicule automobile et le renflement (13).

4. Ensemble d'échangeur de chaleur selon la revendication 1, **caractérisé en ce que** les renflements (13) dans les parois (7) sont des déformations des parois (7) suivant sensiblement le contour des échangeurs de chaleur (3, 4, 5) avec des tubulures d'entrée et de sortie saillantes (1, 2).

5. Ensemble d'échangeur de chaleur selon la revendication 1, **caractérisé en ce que** les entretoises (9) sont au moins en partie formées de telle manière qu'elles présentent des propriétés de guidage d'air dans les coins (40) des échangeurs de chaleur (3, 4, 5) qui se suivent dans la direction d'écoulement de l'air de refroidissement.

6. Ensemble d'échangeur de chaleur selon la revendication 2, **caractérisé en ce que** les points de fixation restants (11.2) des échangeurs de chaleur (3, 4, 5) sont formés par des crochets ou des pattes (41) sur les caissons collecteurs (10) des échangeurs de chaleur (3, 4, 5) et des logements (42) sur les parois (7, 8) du cadre (6), de telle manière que les échangeurs de chaleur (3, 4, 5) puissent être introduits par leurs crochets ou leurs pattes (41) dans les logements associés (42) et que la fiche (15) puisse être introduite dans l'au moins un point de fixation (11.1) prévu à cet effet par échangeur de chaleur (3, 4 ou 5).

7. Ensemble d'échangeur de chaleur selon l'une quelconque des revendications précédentes, **caractérisé en ce que** l'au moins un point de fixation (11.1), qui présente une fiche (15), et les autres points de fixation (11.2) sans fiche (15) sont disposés ou réalisés de telle manière que des forces de fixation agissant dans la direction de la tige (17) de la fiche (15) soient compensées par les autres points de fixation (11.2) et que la dilatation thermique des échangeurs de chaleur (3, 4, 5) dans la direction transversale de la tige (17) soit permise.

8. Ensemble d'échangeur de chaleur selon l'une quelconque des revendications précédentes, **caractérisé en ce qu'**une hotte de ventilateur (50) fait partie de l'ensemble d'échangeur de chaleur et **en ce qu'**il est prévu des points de fixation (11.3) avec des fiches (15) en forme de chevilles et sans fiche (15) en forme de chevilles entre les parois (7, 8) du cadre (6) et le bord (81) de la hotte de ventilateur (50), dans lequel les fiches (15) sont séparables.

9. Ensemble d'échangeur de chaleur selon la revendication 8, **caractérisé en ce que** les points de fixation (11.3) sans fiches sont équipés de crochets (51) et de logements (52) sur les faces frontales des parois (7, 8) ou sur le bord (81) de la hotte de ventilateur (50), dans lequel les faces frontales des parois longitudinales et transversales (7, 8) sont situées sensiblement dans un plan (80), dans lequel les crochets (51), les logements (52) et les fiches (15) reprennent essentiellement des forces qui peuvent agir parallèlement à la direction de l'air, et dans lequel les forces agissant transversalement à cette direction sont reprises essentiellement par un assemblage à complémentarité de forme entre les faces frontales et le bord (81) de la hotte de ventilateur (50).
